(19) Europäisches Patentamt
European Patent Office
Office européen des brevets

(11) **EP 2 594 601 B1**

(12) **EUROPÄISCHE PATENTSCHRIFT**

(45) Veröffentlichungstag und Bekanntmachung des Hinweises auf die Patenterteilung:
**16.10.2019   Patentblatt 2019/42**

(51) Int Cl.:
***C08J 7/04*** *(2006.01)*        ***G01N 21/64*** *(2006.01)*

(21) Anmeldenummer: **12007682.3**

(22) Anmeldetag: **13.11.2012**

(54) **Optode**

Optode

Optode

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2011   DE 102011118618**

(43) Veröffentlichungstag der Anmeldung:
**22.05.2013   Patentblatt 2013/21**

(73) Patentinhaber: **Forschungszentrum Jülich GmbH 52425 Jülich (DE)**

(72) Erfinder:
- **Pfeifer, Johannes
  53359 Rheinbach (DE)**
- **Mielewczik, Michael
  8057 Zürich (CH)**
- **Blossfeld, Stephan
  51519 Odenthal (DE)**
- **Scharr, Hanno
  52428 Jülich (DE)**
- **Nagel, Kerstin A.
  52428 Jülich (DE)**
- **Walter, Achim
  8045 Zürich (CH)**
- **Schurr, Ulrich
  52428 Jülich (DE)**

(56) Entgegenhaltungen:
**US-A- 6 143 570        US-A1- 2003 119 195
US-B1- 6 576 192**

- **STAAL M ET AL: "Ultrabright planar optodes for luminescence life-time based microscopic imaging of Odynamics in biofilms", JOURNAL OF MICROBIOLOGICAL METHODS, ELSEVIER, AMSTERDAM, NL, Bd. 85, Nr. 1, 18. Januar 2011 (2011-01-18), Seiten 67-74, XP028173564, ISSN: 0167-7012, DOI: 10.1016/J.MIMET.2011.01.021 [gefunden am 2011-01-26]**
- **HOLST G ET AL: "Luminescence lifetime imaging with transparent oxygen optodes", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 74, Nr. 1-3, 15. April 2001 (2001-04-15), Seiten 78-90, XP027370125, ISSN: 0925-4005 [gefunden am 2001-04-15]**

**Beschreibung**

Die Erfindung betrifft eine Optode sowie ein Verfahren zur Herstellung dieser Optode.

Stand der Technik:

Zur optischen Messung verschiedener chemischer und/oder physikalischer Eigenschaften in den Fachgebieten der Medizin, Biotechnologie und der Biologie, gilt die Verwendung von planaren Optoden derzeit als Stand der Technik. Planare Optoden (im folgenden auch Optoden genannt) sind beispielsweise zur spezifischen Messung der Konzentration von Ammonium, Sauerstoff, Kohlendioxid, pH und verschiedenen Ionen sowie organischen Verbindungen bekannt.

Die Messung basiert dabei auf der Verwendung von spezifischen, auf den zu messenden Parameter abgestimmten Fluoreszenzfarbstoffen, die kurzfristig mit Licht einer oder mehrerer spezieller Wellenlängen angeregt werden. Der Farbstoff fluoresziert dabei in Abhängigkeit der Quantität des zu messenden Parameters und Intensität des anregenden Lichts für wenige Millisekunden, bzw. Nanosekunden. Von der Fluoreszenz abzugrenzen ist die Phosphoreszenz, bei der die Lichtemission wesentlich länger andauert, u.U. bis zu mehreren Stunden. Beide Begriffe (Fluoreszenz und Phosphoreszenz) sind dem allgemeinen Begriff der Lumineszenz unterzuordnen.

In der Regel wird der Farbstoff in oder auf einer Polymermatrix fixiert/ immobilisiert und in bzw. auf das zu untersuchende Medium bzw. Objekt ein-, bzw. aufgebracht. Die optische Messung erfolgt mittels eines geeigneten optischen Aufbaus (z.B. CCD-Kamera) außerhalb des Mediums bzw. Objektes. Durch diese Entkopplung von Sensor (z.B. der Optode) und Detektor (z.B. der CCD-Chip) ist eine nichtinvasive Erfassung des zu analysierenden Parameters möglich.

Eine weitere Möglichkeit der optischen Erfassung der Fluoreszenz stellt die Anwendung eines schrittmotorgebundenen Systems dar (Blossfeld und Gansert 2007, Blossfeld et al. 2010). Hierbei handelt es sich um ein kameraunabhängiges System, bei dem sowohl das Anregungslicht, als auch die Fluoreszenz über eine Glasfaser von der Lichtquelle zum Sensor bzw. vom Sensor zum Detektor geleitet wird. Die Glasfaser wird dabei in einem definiertem Raster von außen über den Sensor gefahren.

Bislang haben sich zwei Fluoreszenzmessmethoden etabliert:

1. Fluoreszenzlebenszeitmessung eines Farbstoffes (z.B. Holst et al. 1998)

Bei dieser Methode wird der Fluoreszenzfarbstoff mit Licht einer spezifischen Anregungswellenlänge angeregt und nach Erlöschen der Anregung, die Abklingzeit der Fluoreszenz gemessen (Fluoreszenzlebenszeit), welche abhängig von der Analytkonzentration ist. Einige Fluoreszenzfarbstoffe besitzen jedoch eine extrem kurze Fluoreszenzlebenszeit (wenige Nanosekunden), sodass es erforderlich sein kann, neben dem analytsensitiven Fluoreszenzfarbstoff einen analytinsensitiven Referenzfarbstoff in die Optoden zu integrieren (Schröder 2006). Da dieser Referenzfarbstoff unabhängig von der Analytkonzentration im Millisekundenbereich fluoresziert und ebenfalls von der verwendeten Anregungswellenlänge angeregt wird, überlagern sich die beiden Fluoreszenzsignale (dual lifetime referencing). Dieses Mischsignal ist damit ebenfalls abhängig von der Analytkonzentration und erlaubt so die Fluoreszenzlebenszeitmessung von Fluoreszenzfarbstoffen mit kurzlebiger Fluoreszenzlebenszeit.

2. Ratiometrische Fluoreszenzmessung eines Farbstoffes (z.B. Hakonen et al. 2010)

Bei dieser Methode wird im lokalen Maximum des Emissionsspektrums gemessen und Verhältnisse der Fluoreszenzintensität des Fluoreszenzfarbstoffes berechnet. Dabei können ggf. unterschiedliche Anregungswellenlängen und ggf. variierende Emissionswellenlängen verwendet werden, welche spezifisch von der jeweiligen Analytkonzentration abhängig sind. In der konkreten Ausführung gibt es beispielsweise mehrere Varianten (Schröder 2006):

Verwendung von zwei Anregungswellenlängen und einer Emissionswellenlänge: "Dual Excitation/ single Emission"
Verwendung von zwei Anregungswellenlängen und zwei Emissionswellenlängen: "Dual Excitation/ dual Emission"
Verwendung von einer Anregungswellenlänge und zwei Emissionswellenlängen: "Single Excitation/ Dual Emission"

Bei beiden Messmethoden ist es möglich, mittels eines geeigneten optischen Aufbaus (i.d.R. CCD-Kamera) eine räumliche quantitative Erfassung (Kartografie) des zu messenden Parameters zu realisieren. Eine dreidimensionale, semiquantitative Erfassung wird beispielsweise in der konfokalen Fluoreszenzmikroskopie verwendet. Eine Erfassung in zeitlich hoher Auflösung ist prinzipiell ebenfalls möglich, hängt im Einzelfall jedoch vom zu untersuchenden Messobjekt ab. Hierbei ist insbesondere der Einfluss des verwendeten Lichts auf das Messobjekt zu berücksichtigen. Die gebräuchlichsten gemessenen Parameter sind Sauerstoff-, bzw. Kohlendioxidkonzentration ($[O_2]$, $[CO_2]$) und pH-Wert (pH), jedoch sind auch Fluoreszenzfarbstoffe für die Messung der Konzentration einer Vielzahl anderer Parameter verfügbar (z.B.

Metallionen, Ammonium-Stickstoff).

| Analyt | Farbstoff | Fluoreszenzmessung | Referenzen |
|---|---|---|---|
| pH | HPTS | Ratiometrisch | Hakonen und Hulth 2008 |
|  |  |  | Hulth et al. 2002 |
|  | DHFAE | Dual lifetime referencing | Stahl et al. 2006 |
|  |  |  | Schröder 2006 |
| $O_2$ | Ruthenium(II)diimin Complex | Lebenszeit | Glud et al. 1998 |
|  |  |  | Holst et al. 1998 |
|  |  |  | Holst und Grunwald 2001 |
|  |  |  | Schröder 2006 |
|  | PtOEP | Lebenszeit | Oguri et al. 2006 |
|  | Pt-PFP | Lebenszeit | Precht et al. 2004 |
| $CO_2$ | HPTS + $TOA^+$ | Ratiometrisch | Zhu et al. 2006 |
|  |  | Dual lifetime referencing | Schröder 2006 |
| **DHFAE:** 2', 7'-dihexyl-5(6)-*N*octadecyl-carboxamidofluoresceinethylester und das phosphoreszente Ruthenium (II)-Tris-4,7-diphenyl-1,10-phenanthrolin eingebettet in Nanopartikel, als inerter Referenzstandard **pH sensitiver Fluoreszenzfarbstoff für den pH Bereich 7.3 - 9.3**<br>**HPTS:** 8 - Hydroxypyrene - 1,3,6 - trisulfonische Säure als Trinatriumsalz **pH sensitiver Fluoreszenzfarbstoff für den pH Bereich 5.5 - 8.6 (Zhu et al. 2005) bzw. $CO_2$ sensitiver Fluoreszenzfarbstoff 0 - 20 %**<br>**PtOEP:** Platin(II) 2,3,7,8,12,13,17,18-octaethyl-21H,23H-porphyrin **pH sensitiver Fluoreszenzfarbstoff**<br>**Pt-PFP: P**latin(II) mesotetra (pentafluorophenyl) porphyrin **$O_2$ sensitiver Fluoreszenzfarbstoff für den Bereich 0 % - >21 % $O_2$**<br>**Ruthenium(II)diimin Komplex:** Ruthenium(II)-tris-4,7-diphenyl-1,10-phenanthrolin, mit trimethylsilylpropanesulfonat als Gegenion **$O_2$ sensitiver Fluoreszenzfarbstoff für den Bereich 0 % - >21 % $O_2$**<br>**$TOA^+$:** Tetraoctylammonium Kation **Verbessert die Sensitivität von HPTS gegenüber $CO_2$** | | | |

Die *räumliche Auflösung* ist in der Regel von der Pixelauflösung der verwendeten Kamera und dem Kameraabstand abhängig (z.B. Gesamtfläche 101 cm² bei einer Pixelgröße von 277 $\mu$m x 277 $\mu$m, Hakonen et al. 2010). Im Falle des schrittmotorgebundenen Systems ist die räumliche Auflösung abhängig von der Schrittweite der Motoren und dem Durchmesser des Lichtkegels (z.B. Gesamtfläche 80 cm² bei einer Schrittweite von 1.5 bis 3.0 mm je Schritt, Blossfeld und Gansert 2007).

Die *zeitliche* Auflösung zwischen zwei Bildaufnahmen liegt bei der Verwendung von kameragestützten Systemen im Sekundenbereich, bzw. Millisekundenbereich und ist von den Kameraeigenschaften, sowie der angegliederten Datenverarbeitungsroutine abhängig (z.B. Ringpuffer, Echtzeitverarbeitung, etc.). Langzeitmessungen von mehreren Tagen bis Wochen sind dabei möglich, benötigen jedoch ggf. einen großen Datenspeicher von mehreren MB bis GB mit ausreichend schnellen Zugriffszeiten, Datentransferraten und Zwischenspeichern (Hakonen et al. 2010). Bei der Verwendung von schrittmotorgebundenen Systemen liegt die zeitliche Auflösung zwischen den Einzelschritten im Sekundenbereich (2-3 Sekunden), die zeitliche Auflösung zwischen zwei vollständigen Rasterzyklen ist dabei abhängig von der Schrittzahl und liegt i.d.R. im Minutenbereich (Blossfeld und Gansert 2007). Langzeitmessungen von mehreren Tagen bis Wochen sind dabei ebenfalls möglich und benötigen einen vergleichsweise kleinen Datenspeicher von wenigen MB.

Bisher sind semitransparente Optoden bekannt, die z.B. bei der Untersuchung von Boden das Vorhandensein von Tiergängen (z.B. Wurmgängen) visuell (durch die Optode hindurch) erkennen lassen (Holst und Grundwald 2001, Frederiksen und Glud 2006).

Bei der Anwendung von Optoden im Rahmen von z.B. Boden oder Pflanzenwurzeluntersuchungen können diese durch eine transparente Glasscheibe von außen optisch ausgelesen werden. Eine Öffnung des Systems ist somit für die Messung nicht notwendig, und negative Veränderungen des Systems, z.B. hinsichtlich einer Störung des Gas- oder Feuchtehaushalts, werden ausgeschlossen.

Aus M. Staal et al. 2011 ist eine transparente Optode enthaltend Fluorophore bekannt, bei der die Fluorophore auf einem Träger aus Glas aufgebracht und immobilisiert sind und die zur Untersuchung der Sauerstoffverteilung in Biofilmen eingesetzt wird. Hier wird jedoch nicht näher erläutert, in welchem Wellenlängenbereich und in welcher quantitativen Höhe die Transmissivität dieser Optode liegt.

Nachteile des Stands der Technik:

In der Literatur werden sehr viele Optoden beschrieben, mit denen chemisch/physikalische Parameter erfasst und analysiert werden können. Diese Optoden weisen jedoch insbesondere im nahinfraroten Bereich des Spektrums (NIR) sowie im sichtbaren Bereich des Spektrums (VIS) optische Eigenschaften auf, die eine gleichzeitige Untersuchung, Bildanalyse eines Objekts, welches sich hinter der Optode befindet nicht zulassen. So ist es beispielsweise mit den bisher bekannten Optoden nicht möglich, eine gleichzeitige Messung von chemisch/physikalischen Parametern im Bereich einer Wurzelumgebung von Pflanzen und eine zeitgleiche Wachstumsanalyse dieses Wurzelbereichs mit Hilfe eines optischen Wachstumsanalyseverfahrens, welches auf der fotographischen Auswertung von Bilddaten des Wurzelbereichs beruht, durchzuführen. Für die fotographische Erstellung dieser Bilddaten muss eine hohe Bildgüte gewährleistet werden, die beispielsweise eine Verwendung der Methode DISP (Nagel et al. 2006) oder GROWSCREEN root (Nagel et al. 2009) zulassen. Die Methoden DISP (Nagel et al. 2006) und GROWSCREEN root (Nagel et al. 2009) dienen der kameragestützten, kontinuierlichen, hochauflösenden, nicht-invasiven Wachstumsmessung von Wurzeln und Blättern mittels Bildanalysealgorithmen.

Bisher gibt es keine Optoden, die nachweislich und/oder quantifiziert optische Eigenschaften aufweisen, die geeignet sind, um Objekte ohne wesentliche optische Einschränkungen durch die Optode hindurch eindeutig und signifikant erkennen und untersuchen/analysieren zu können.

Aufgabe der Erfindung:

Es ist daher Aufgabe der Erfindung, eine Optode bereitzustellen, deren optische Eigenschaften ein Hindurchschauen und Hindurchfotografieren durch die Optode ermöglichen. Es ist weiterhin Aufgabe der Erfindung ein Verfahren zur Herstellung einer transparenten Optode bereitzustellen.

Die Aufgabe wird durch eine Optode nach Anspruch 1 gelöst. Vorteilhafte Ausgestaltungen ergeben sich aus den darauf rückbezogenen Ansprüchen. Die Aufgabe wird weiterhin gelöst durch die nebengeordneten Ansprüche und die jeweiligen vorteilhaften Ausgestaltungen der rückbezogenen Ansprüche.

Die erfindungsgemäße Optode umfasst folgende Komponenten:

a) ein Trägermaterial

b) ein Polymer enthaltend mindestens ein Fluorophor, wobei das Polymer mit dem Fluorophor auf dem Trägermaterial immobilisiert ist und die Optode nach dem Aufbringen des Fluorophors auf das Trägermaterial noch transparent ist.

Als Trägermaterial kann vorzugsweise ein transparentes Trägermaterial, besonders bevorzugt eine transparente Celluloseacetatfolie, insbesondere Cellulosediacetatfolie eingesetzt werden. Als ganz besonders bevorzugt hat sich eine Cellulosediacetatfolie von Clarifoil® erwiesen.

Als Polymer kann beispielsweise Ethylcellulose eingesetzt werden. In dem Polymer sollte mindestens ein Fluorophor enthalten sein. Je nachdem welche physikalisch- chemischen Parameter analysiert werden sollen, können auch mehrere Fluorophore zusammen auf der Optode immobilisiert werden.

Als Fluorophore, die als Indikatoren für die jeweiligen chemischen und/oder physikalischen Parameter dienen, sind sämtliche nach dem Stand der Technik bekannten Fluorophore geeignet. Beispielhaft jedoch nicht einschränkend können Verbindungen aus der Gruppe HPTS, DHFAE, PtOEP, PT-PFP, Rhutenium(II)diimin-Komplexe oder TOA$^+$ genannt werden. Die im Rahmen dieser Erfindung detektierbaren und koregistrierbaren chemisch/physikalischen Parameter können dabei unterschiedlicher Natur sein. Gemessen werden können beispielsweise Temperatur, pH-Werte, spezifische Stoffkonzentrationen (beispielsweise von Ammoniumionen, Sauerstoff, $CO_2$).

Grundsätzlich ist die Auswahl der zu beobachtenden Parameter sehr vielseitig, da prinzipiell eine Vielzahl von Fluorophoren genutzt werden können, bzw. beschrieben ist. Auch die gleichzeitige Messung verschiedener dieser Parameter ist möglich. Dabei ist darauf zu achten, dass die Emissionswellenlängen der jeweiligen Fluorophore sich so weit unterscheiden, dass ein getrennt auswertbares Signal möglich ist.

Das Aufbringen des Fluorophors, welches in dem Polymer gelöst bzw. enthalten ist, kann durch nach dem Stand der Technik bekannte Verfahren auf das transparente Trägematerial aufgebracht werden. Beispielhaft kann hier das Tauchbeschichtungsverfahren ("Dip-Coating") oder "Knife-Coating" (Messerrakel Beschichtungsverfahren) bei dem das Fluorphor auf das Trägermaterial mit Hilfe eines Messers aufgestrichen wird, das "Spin-Coating" (Rotationsbeschichtungsverfahren) oder ein Aufsprühen oder auch ein Aufdrucken des Fluorophors auf das Trägermaterial genannt werden, wobei das Tauchbeschichtungsverfahren sich als besonders geeignet erwiesen hat. In einer bevorzugten Ausführung des Dip-Coating wurde das Trägermaterial durch ca. 10-sekündiges Eintauchen in die fluoreszenzfarbstoffhaltige Lösung beschichtet und nachfolgend aus der Lösung herausgezogen mit einer Geschwindigkeit von ca. 1 cm/Sekunde.

Die erfindungsgemäß eingesetzte planare transparente Optode besitzt im Vergleich zu nach dem Stand der Technik bekannten, im Handel erhältlichen planaren Optoden vorteilhafte optische Eigenschaften. Durch die erfindungsgemäße planare, transparente Optode ist erstmalig die Erfassung chemisch/physikalischer Parameter mit Hilfe der Optode sowie ein gleichzeitiges Hindurchschauen und Hindurchfotografieren durch die Optode möglich.

Die erfindungsgemäße transparente planare Optode (im folgenden auch vereinfacht nur Optode genannt) weist auch nach Aufbringen des jeweiligen Fluorophors transparente Eigenschaften auf, insbesondere dann wenn sie mit einem Film flüssigen Wassers oder einem fett- oder ölhaltigen Film benetzt ist. Im Rahmen der vorliegenden Erfindung werden unter "optischen Eigenschaften" die Parameter Auflösungsvermögen, Kontrast und Transmissivität verstanden.

Durch die vorteilhaften optischen Eigenschaften, insbesondere die Transparenz, sind erstmalig neben den bisher bekannten Analysemöglichkeiten von Optoden auch gleichzeitige andere Messungen in Form einer Bildanalyse und Bildgebung durch die Optode hindurch möglich.

Unter den vorteilhaften optischen Eigenschaften der Optode, die im Sinne der Erfindung gewünscht sind und die bei Fotografie oder Schauen durch die Optode hindurch genutzt werden können, sind die folgenden Eigenschaften zu verstehen, die zusammen eine hohe Bildgüte und objekttreue Abbildung gewährleisten:

a) die erzielbare Transmissivität (also geringe Absorption von Licht verschiedener Wellenlängen),

b) der erzielbare Grauwert-Kontrast (fotometrischer Kontrast; Unterschiede hinsichtlich der Helligkeit zwischen hellen und dunklen Bereichen beim aufgenommenen Objekt bleiben bei hohem Erhalt des Grauwert-Kontrasts erhalten) und

c) das erzielbare Auflösungsvermögens (bei hohem Auflösungsvermögen geringe Verbreiterung der Punktantwort (in Pixel) in fotografischen Aufnahmen durch die Optode hindurch; Erhalt einer hohen Trennschärfe).

Die vorteilhaften Eigenschaften der Optode sind insbesondere deshalb so bedeutsam, da durch die erfindungsgemäße Optode es möglich wird, gleichzeitig neben der analytischen Messung durch die Optode auch fotographische Aufnahmen von den zu untersuchenden Objekten bzw. Organismen durch die Optode hindurch zu machen, wobei sich die Objekte hinter der planaren transparenten Optode befinden können.

Die genannten vorteilhaften optischen Eigenschaften bedeuten im Falle der hier eingesetzten Optode, dass nur minimale Veränderungen hinsichtlich der Abbildungsqualität bzw. der Bildgüte des durch die Optode hindurch fotografierten Objekts/Organismus verursacht werden. Die Veränderung ist so gering, dass Objekte/Organismen, die sich hinter der Optode befinden, durch die Optode hindurch objekttreu erkannt werden können und bei Fotografie durch die Optode hindurch objekttreu und signifikant gleich zur Referenz wiedergegeben werden können.

Die genannten vorteilhaften Eigenschaften der erfindungsgemäß eingesetzten planaren transparenten Optode haben bestimmte Entsprechungen bezüglich der Bildqualität, die im Folgenden genannt werden:

a) Die gewünschte hohe Transmissivität der Optode wird durch eine geringe Absorption von Licht verschiedener Wellenlängen bedingt. Eine geringe Absorption bewirkt, dass eine nur geringe Abschwächung der Lichtintensität resultiert. Die Lichtintensität, die hier als zu messendes Signal von Bedeutung ist, ist diejenige, die von der Lichtquelle ausgesandt wird, beziehungsweise die vom abzubildenden Objekt reflektiert wird. Die Lichtintensität ist das Signal, das dann z.B. durch den Sensor einer digitalen Foto-Kamera gemessen und bildanalytisch ausgewertet werden kann. Ritzhaupt-Kleissl (2007) schreibt:
"Für Anwendungen in mikrooptischen Bauteilen ist es essenziell, dass die zum Einsatz kommenden Kompositmaterialien eine hohe optische Transparenz besitzen, um eine möglichst verlustarme Lichtleitung und damit Signalübertragung zu ermöglichen."
b) Der gewünschte hohe Grauwert-Kontrast wird durch eine geringe Lichtstreuung bewirkt. Streut die planare transparente Optode das Licht wenig, bleibt ein hoher Grauwert-Kontrast erhalten. Bei hohem Kontrast besitzen helle und dunkle Bereiche in den fotografischen Aufnahmen nur wenig veränderte Grauwerte, wie sie erzielt würden, wenn sich kein Element im Strahlengang befindet, dass das Licht streut.
c) Die hohe Trennschärfe in der fotografischen Aufnahme bzw. das hohe Auflösungsvermögen in der fotografischen Aufnahme wird durch eine Punktantwort mit kleinem Durchmesser bewirkt. Die Punktantwort (Streuscheibchen, Greensche Funktion, Transmissionsfunktion) besagt, wie ein scharfer Lichtpunkt nach Durchgang durch das optische System, hier die Optode, aussieht. Ist der Lichtpunkt breit, wird das durch die Optode gesehene Bild unscharf. Die beobachtete Verbreiterung kann durch Lichtstreuung bewirkt werden.

Grundsätzlich werden diese optischen Eigenschaften dann als vorteilhaft betrachtet, wenn durch ein Objekt hindurchgeschaut werden soll, wie z.B. bei Sichtscheiben (Fensterglasscheiben). Die Absorption muss in diesem Fall möglichst gering, der Grauwert-Kontrast möglichst hoch und das Auflösungsvermögen möglichst hoch sein.

So weist die erfindungsgemäße Optode eine Transmissivität von mehr als 90 % ab einer Wellenlänge von 280 nm auf.

Weiterhin weist die erfindungsgemäße Optode eine Verringerung des Auflösungsvermögens von 4 % bei Belichtung mit Licht im sichtbaren Bereichs des Spektrums auf und eine Verringerung des Auflösungsvermögens von 1 % bei Belichtung mit Licht der Wellenlänge von 880 nm.

Die Optode weist in vorteilhafter Weise eine Verringerung des Grauwert-Kontrasts um 24 % bei Verwendung von Licht im sichtbaren Bereich auf und eine Verringerung um 6 % bei Verwendung von Licht im nahinfraroten Bereich von 880 nm.

Die Messung mit Optoden basiert auf der Verwendung von spezifischen, auf den zu messenden Parameter abgestimmten Fluoreszenzfarbstoffen (Fluorophore), die kurzfristig mit Licht einer oder mehrerer spezieller Wellenlängen angeregt werden. Der Farbstoff fluoresziert dabei in Abhängigkeit der Quantität des zu messenden Parameters. In der Regel wird der Farbstoff in oder auf einer Polymermatrix fixiert und in/auf das zu untersuchende Medium ein/aufgebracht bzw. steht mit dem zu untersuchenden Objekt oder Medium in chemisch und/oder physikalischem Kontakt. Die optische Messung des Signals des Fluorophors erfolgt mittels eines geeigneten optischen Aufbaus (z.B. CCD-Kamera) außerhalb des zu untersuchenden Mediums.

Die erfindungsgemäße planare transparente Optode zur Messung der chemisch und/oder physikalischen Parameter, beispielsweise des pH-Wertes, die sich, wenn sie mit einem Film flüssigen Wassers oder Fett oder Öl benetzt ist, durch eine Transparenz auszeichnet, die beispielsweise alle in Walter et al. 2009 genannten Verfahren zur Messung von Wachstumsprozessen von Wurzeln ermöglicht (wie z.B. DISP und GROWSCREEN root), und den Fluoreszenzfarbstoff immobilisiert, kann hergestellt werden, indem eine Celluloseacetat-Folie (z.B. von Clarifoil, Typ N 125; Foliendicke 125 $\mu$m) mit einem Ethylcellulose-Polymer beschichtet wird, in welches mindestens ein Fluorophor, wie z. B. der Fluoreszenzfarbstoff HPTS (8-Hydroxy-1,3,6-Trisulfonsäure) immobilisiert wird.

Je nach Anwendung sind jedoch auch alle nach dem Stand der Technik bekannten Fluorophore geeignet. Je nachdem ob mehrere Fluorophore und/oder Ionophor-Schichten (ionenselektive Schichten, um gezielt nur einen Analyten an den Fluorophor gelangen zu lassen) in die Optode eingebracht werden ist ggf. sogar eine gleichzeitige Messung mehrerer chemischer Analyte und/oder physikalischer Parameter möglich.

Die verwendeten Optoden sollen im Sinne der Erfindung über den sichtbaren Bereich des Spektrums sowie über den nahinfraroten Bereich des Spektrums 1.) eine maximale Transmissivität, 2.) ein maximales Auflösungsvermögen sowie 3.) einen maximalen Grauwert-Kontrast besitzen, um beispielsweise optische Messungen von Wachstumsparametern (vgl. Walter et al. 2009) möglichst nicht zu beeinträchtigen.

Weitere Vorteile der erfindungsgemäßen Optode sind

a) die gleichzeitige hohe Abriebfestigkeit der Polymerschicht, die auf den Träger aufgebracht ist und den Fluorophor enthält (Polymerschicht kann unter fließendes Wasser gehalten werden, ohne sich abzulösen),
b) die starke Immobilisierung des Fluorophors (beispielweise HPTS diffundiert nicht aus der Polymerschicht), sowie
c) die hohe Sensitivität (Zhu et al. 2005) der Optode.

Zhu et al. (2005) schreiben, dass HPTS als einer der besten Indikatoren zur fluoreszenzspektrometrischen pH-Messung gilt, da HPTS eine exzellente Fotostabilität, eine hohe Fluoreszenzquantenausbeute und weitere vorteilhafte Eigenschaften aufweist.

Diese Eigenschaften sind insbesondere bei Immobilisierung des Fluorophors HPTS festzustellen. HPTS ist im Vergleich zu anderen Fluorophoren besonders gut erforscht (Zhu et al. 2005), stabil gegenüber fotolytischem Abbau des Moleküls durch Lichteinstrahlung (Zhu et al. 2005). In vielen Fällen können beispielsweise auch Ionophore in oder auf die Optode ein- oder aufgebracht werden.

Die Erfindung bietet neuartige Lösungen und Anwendungen für mehrere wirtschaftliche und wissenschaftliche Zwecke. Dabei ist beispielsweise vor allem die Nutzpflanzenwissenschaft zu nennen, der die erfindungsgemäße Optode und deren Anwendung die Möglichkeit eröffnet, auf den Gebieten der Pflanzenzuchtwissenschaft sowie der Pflanzenschutzwissenschaft Screenings durchzuführen. Diese Screenings können beispielsweise der Untersuchung des Potentials verschiedenen Pflanzentypen (beispielsweise Sorten, Biotypen, Ökotypen, Mutanten, Arten, Transgenen, Hybriden u.a.) dienen, mit ihrer Umwelt im gewünschten Sinne auf chemisch-physikalische Weise zu interagieren.

Anwendungen finden sich demnach beispielsweise in der kombinierten, simultanen Messung von chemisch-physikalischen Wechselwirkungen, welche von Lebewesen, Geweben oder Zellkolonien auf das Wachstumssubstrat oder Wachstumsmedium ausgehen, oder umgekehrt vom Wachstumssubstrat oder Wachstumsmedium auf Lebewesen, Geweben oder Zellkolonien ausgehen, sowie der räumlichen und zeitlichen Auswirkungen und Verteilungen von Schadstoffen, Xenobiotika, Nährstoffen oder anderen biologischen, chemischen und physikalischen Stimuli und der gleichzeitigen bildgebenden und bildanalytischen Erfassung von Wachstumsparametern, mit dem Ziel z.B. eines Sorten/Ökotypen-Screenings, Stoffwechsel-Monitorings, Toleranz- und/oder Resistenz-Screenings und/oder - Monitorings, in hoher räumlicher und zeitlicher Auflösung. Hier kann durch die erfindungsgemäße Optode hindurch eine ausreichende optische Auswertung des zu untersuchenden Objekts wie beispielweise der Wurzelbereich oder auch der Sproß einer Pflanze erfolgen. Weiterhin ist die erfindungsgemäße Optode geeignet für Untersuchungen von Bakterien, Pilzen oder tierischen Zellen und Organismen.

Dabei kann eine Anwendung beispielsweise auch in der Untersuchung des Nährstoffaufnahmevermögens einer Pflanze bestehen oder in der Untersuchung eines Herbizideffekts auf Stoffwechselprozesse der Rhizosphäre oder Toleranzen von Pflanzen gegenüber Umweltgiften. Von besonderem Interesse sind in wirtschaftlicher Hinsicht unter letztgenannten Pflanzen insbesondere Nutzpflanzen zu verstehen.

Ein weiteres beispielhaftes Anwendungsfeld besteht somit auch in den Umweltwissenschaften und der Umwelttoxikologie. Eine denkbare Anwendung könnte z.B. darin bestehen, den Einfluss von Umweltgiften (z.B. Schwermetalle) auf die Wechselwirkungen zwischen Wurzel und Boden in der Rhizosphäre aufzuzeigen und zu quantifizieren. Die Deposition und Konzentration von Schwermetallen in Ökosystemen nimmt gegenwärtig weltweit zu und stellt seit Jahren einen Schwerpunkt der umwelttoxikologischen Forschung dar.

Gegenstand der Erfindung ist weiterhin ein Verfahren zur Herstellung der transparenten planaren Optode.

Das Verfahren umfasst folgende wesentliche Schritte:

a) Herstellung einer Lösung 1 umfassend ein Fluorophor, welches in einem Lösungsmittel gelöst wird. Geeignet sind grundsätzlich alle Lösungsmittel, in denen sich das jeweils zu verwendende Fluorophor löst.
b) Herstellung einer Lösung 2 umfassend eine Polymer gelöst in einem Lösungsmittel. Als besonders bevorzugt wird Ethyl-Zellulose als Polymer eingesetzt.
c) Mischen der Lösungen 1 und 2 zur Herstellung der Lösung 3
d) Beschichten des transparenten Trägermaterials mit Lösung 3 durch ein geeignetes Verfahren
e) Trocknen der Optode
f) Reinigungsschritt. Hier werden beispielsweise das nicht anhaftende Polymer sowie nicht immobilisierte Fluorophore durch Spülen mit deionisiertem Wasser entfernt.

Zur Herstellung der Lösung 1, unter Verwendung des Fluorophors HPTS ist eine Tetraoctylammonium-Hydroxid- Lösung geeignet, die mit einer alkoholischen Lösung verdünnt ist.

Als Fluorophore sind wie schon zuvor erläutert alle nach dem Stand der Technik bekannten Fluorphore geeignet. Hier seien beispielhaft Fluorophore aus der Gruppe HPTS, DHFAE, PtOEP, PT-PFP, Rhutenium(II)diimin-Komplexe oder $TOA^+$ genannt. Zur Herstellung der Lösung 2 kann das Polymer in einem Lösungsmittel bestehend aus einer Mischung aus einer alkoholischen Lösung mit einem unpolaren/wenig polaren Lösungsmittel, gelöst werden.

Als Polymer kann beispielsweise Ethylcellulose eingesetzt werden. Hier können jedoch ebenfalls alle nach dem Stand der Technik bekannten Polymere eingesetzt werden, die zur Verwendung mit Fluorophoren geeignet sind.

Als Trägermaterial wird bevorzugt ein transparentes Trägermaterial eingesetzt. Dies kann besonders bevorzugt eine Celluloseacetat/Cellulosediacetatfolie sein. Als besonders bevorzugt hat sich eine Cellulosediacetatfolie von Clarifoil® erwiesen, die eine Schichtdicke von 125 $\mu$m aufwies.

Das Beschichten des Trägermaterials kann mit allen bekannten Beschichtungsverfahren durchgeführt werden. Hier seien beispielhaft Tauchbeschichtungsverfahren (Dip-Coating), Aufsprühverfahren, Aufdruckverfahren, Messerrakel Beschichtungsverfahren (Knife-Coating) oder Rotationsbeschichtungsverfahren (Spin-Coating) genannt.

Im Weiteren wird die Erfindung an Hand von Ausführungsbeispielen und den beigefügten Figuren und Tabellen näher erläutert.

Es zeigen:

Figur 1: Relative Transmissivität (%) einer Optode nach Stand der Technik (a) im Vergleich zur Transmissivität der erfindungsgemäßen Optode (b) für Licht im Wellenlängenbereich zwischen 180 bis 880 nm; Abszisse X: Wellenlänge (nm); Ordinate Y: Relative Transmissivität (%)

Figur 2: Absorptionsspektren und beispielhaftes Emissionsspektrum (E) einer Optode mit HPTS in Abhängigkeit verschiedener pH-Werte (pH 5,3; pH 9,7)

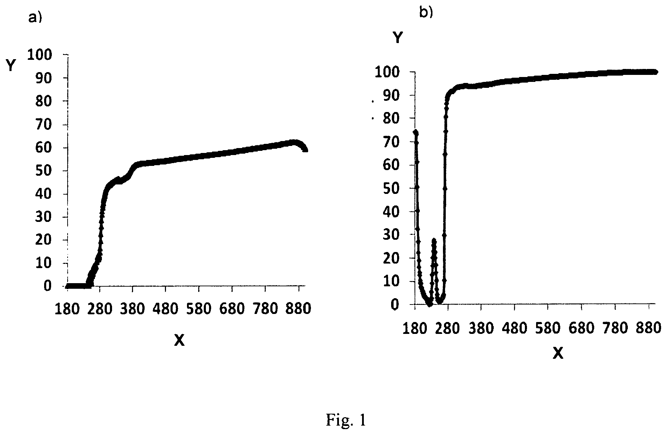

Es zeigt Figur 1 sowie einige exemplarische Meßwerte aus Figur 1 in Tabelle 1 die relative Transmissivität einer Optode nach dem Stand der Technik (a) im Vergleich mit der neuen erfindungsgemäßen Optode (b) in Abhängigkeit von der Wellenlänge. Eine höchstmögliche optimale Lichtdurchlässigkeit und damit Durchsichtigkeit im gesamten Spektrum wäre bei einer 100 %- igen Transmission des Lichts (Transmissivität der Optode) bei allen Wellenlängen gegeben. Wie der Vergleich der Optoden zeigt, weist die erfindungsgemäße Optode ab einer Wellenlänge von ca. 280 nm eine Transmissivität von mehr als 90 % auf, während die Optode des Stands der Technik bei 280 nm nur eine relative Transmissivität von ca. 14,66 % aufweist bis maximal 62 % bei 852 nm.

Tabelle 1: Relative Transmissivität der erfindungsgemäßen Optode und einer Optode nach dem Stand der Technik bei unterschiedlichen Wellenlängen

| Wellenlänge (nm) | Relative Transmissivität (%) Erfindungsgemäße Optode | Relative Transmissivität (%) Optode nach Stand der Technik |
|---|---|---|
| 280 | 90,13 | 14,66 |
| 286 | 91,23 | 30,95 |
| 343 | 93,81 | 45,75 |
| 481 | 96,19 | 54,21 |
| 696 | 98,92 | 58,42 |
| 725 | 99,09 | 59,03 |
| 852 | 99,91 | 61,94 |
| 900 | 99,97 | 59,33 |

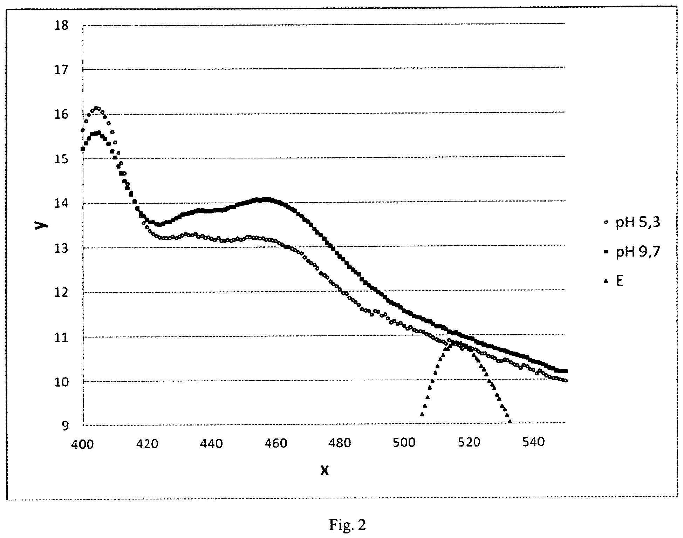

Es zeigt Figur 2 relative Absorptionsspektren in % bezogen auf die eingestrahlte Lichtmenge und beispielhaft ein relatives Emissionsspektrum (E) in % der erfindungsgemäßen Optode, die den Fluorophor HPTS enthält, bei unterschiedlichen pH-Werten. Ordinate X: Wellenlänge (nm); Abszisse Y: Relative Absorption bzw. Emission in % bezogen auf die eingestrahlte Lichtmenge. Die Optode weist zwei Absorptionsmaxima im Bereich von 1.) 405 nm auf und ein zweites Absorptionsmaximum bei 450 nm. Weiterhin weist sie ein Emissionsmaximum bei 515 nm auf. Damit zeigt sich, dass die erfindungsgemäße Optode für ratiometrische Fluoreszenzmessungen, wie schon zuvor beschrieben, geeignet ist. Es können zwei Anregungswellenlängen von 405 nm und 450 nm verwendet werden und eine Emissionswellenlänge von 515 nm.

Tabelle 2: Relativer Grauwert-Kontrast (Differenz der Grauwerte) in % in Bezug auf die Referenz (Ohne Optode) bei fotographischen schwarz-weiß Aufnahmen von Punkten des Schrifttyps Times New Roman mit einer Punktgröße 128 mit einer Belichtung mit Licht der Wellenlänge von 880 nm

| | Ohne Optode | Neue Optode | Optode nach Stand der Technik |
|---|---|---|---|
| Relativer Grauwertkontrast (Mittelwert) | 100 % | 94 % | 11 % |

Tabelle 2 zeigt den relativen Grauwert-Kontrast (Differenz der Grauwerte) in Bezug auf die Referenz (Ohne Optode) bei fotographischen schwarz-weiß Aufnahmen von Punkten des Schrifttyps Times New Roman mit einer Punktgröße 128. (Siehe auch Tabelle 6) mit einer Belichtung mit Licht der Wellenlänge von 880 nm. Messort je in der Mitte des ganz rechten schwarzen Punktes (Schriftgröße 128) in der jeweiligen fotografischen Aufnahme unter Verwendung eines engbandigen Filters, welcher ausschließlich Licht mit der Wellenlänge 880 nm transmittieren läßt. Ein kleiner Wert zeigt einen geringen Grauwert-Kontrast zwischen weißen und schwarzen Bereichen in der fotografischen Aufnahme. Erwünscht ist ein Wert möglichst nahe am Wert ohne Optode (100 %). Die erfindungsgemäße Optode weist die gewünschte verbesserte Eigenschaft gegenüber der Optode des Stands der Technik deutlich auf.

Tabelle 3: Relativer Grauwert-Kontrast (Differenz der Grauwerte) in % in Bezug auf die Referenz (Ohne Optode) bei fotographischen schwarz-weiß Aufnahmen von Punkten des Schrifttyps Times New Roman mit einer Punktgröße 128 mit Belichtung mit sichtbarem Licht

| | Ohne Optode | Neue Optode | Optode nach Stand der Technik |
|---|---|---|---|
| Relativer Grauwertkontrast (Mittelwert) | 100 % | 76 % | 7 % |

Es zeigt Tabelle 3 den Relativen Grauwert-Kontrast (Differenz der Grauwerte) in Bezug auf die Referenz (Ohne Optode) bei fotographischen schwarz-weiß Aufnahmen von Punkten des Schrifttyps Times New Roman mit einer Punktgröße 128. (Siehe auch Tabelle 6) mit Belichtung mit sichtbarem Licht. Meßort: je in der Mitte des ganz rechten schwarzen Punktes (Schriftgröße 128) sowie im Punkt zwischen den beiden Punkten mit der Schriftgröße 128 und 64 in der jeweiligen fotografische Aufnahme ohne Verwendung eines Filters. Ein kleiner Wert zeigt einen geringen Grauwert-Kontrast zwischen weißen und schwarzen Bereichen in der fotografischen Aufnahme. Erwünscht ist ein Wert möglichst nahe am Wert ohne Optode (100 %). Die erfindungsgemäße Optode weist die gewünschte verbesserte Eigenschaft gegenüber der Optode des Stands der Technik deutlich auf.

Tabelle 4: Relativer Durchmesser in Prozent des ganz rechten Punktes in der fotografischen Aufnahme (Schriftgröße 128) bei einer Belichtung mit Licht der Wellenlänge 880 nm als Maß für das Auflösungsvermögen

|  | Ohne Optode | Neue Optode | Optode nach Stand der Technik |
|---|---|---|---|
| Relativer Durchmesser (Mittelwert) | 100 % | 101 % | 124 % |

Es zeigt Tabelle 4 den Relativen Durchmesser in Prozent des ganz rechten Punktes in der fotografischen Aufnahme (Schriftgröße 128) bei einer Belichtung mit Licht der Wellenlänge 880 nm als Maß für das Auflösungsvermögen. Ein Wert nahe an 100 % zeigt eine geringe Unschärfe und damit hohe Trennschärfe an. Erwünscht ist ein Wert möglichst nahe am Wert ohne Optode. Die erfindungsgemäße Optode weist die gewünschte verbesserte Eigenschaft gegenüber der Optode des Stands der Technik deutlich auf.

Tabelle 5: Relativer Durchmesser in Prozent des ganz rechten Punktes in der fotografischen Aufnahme (Schriftgröße 128) bei einer Belichtung mit sichtbarem Licht als Maß für das Auflösungsvermögen

|  | Ohne Optode | Neue Optode | Im Handel erhältliche Optode |
|---|---|---|---|
| Relativer Durchmesser (Mittelwert) | 100 % | 104 % | 127 % |

Es zeigt Tabelle 5 den Relativen Durchmesser in Prozent des ganz rechten Punktes in der fotografischen Aufnahme (Schriftgröße 128) bei einer Belichtung mit sichtbarem Licht als Maß für das Auflösungsvermögen. Ein Wert nahe an 100 % zeigt ein geringes Undeutlichwerden und damit hohe Trennschärfe an. Erwünscht ist ein Wert möglichst nahe am Wert ohne Optode. Die erfindungsgemäße Optode weist die gewünschte verbesserte Eigenschaft gegenüber der Optode des Stands der Technik deutlich auf. (Normalisierte arithmetische Mittel der Pixel-Durchmesser, Messwiederholungen =15, Versuchswiederholungen = 2).

Ausführungsbeispiele

**1. Ausführungsbeispiel;**

Herstellung einer erfindungsgemäßen Optode:

Eine Celluloseacetat-Folie (z.B. von Clarifoil®) wird mit einem Ethylcellulose-Polymer beschichtet, in welches der Fluoreszenzfarbstoff HPTS (8-Hydroxy-1,3,6-Trisulfonsäure) immobilisiert wird.

Zur Herstellung der Lösung, mit welcher die Folie beschichtet wird, müssen zunächst zwei Lösungen bereitgestellt werden.

Hier als Lösung 1 und Lösung 2 bezeichnet, welche danach gemischt werden. Die resultierende Lösung, welche hier als Lösung 3 bezeichnet wird, kann z.B. per Tauchbeschichtungsverfahren auf die Trägerfolie aufgebracht werden.

Die Reagenzien zur Herstellung der Lösung 1 können sein:

a.) Tetraoctylammoniumhydroxid-Lösung (TOA+; 10 %- ige Lösung in Methanol) wird gemischt mit

b.) Ethanol (99,5 %- ige Lösung), wobei die Tetraoctylammoniumhydroxid-Lösung an der entstandenen Gesamtlösung aus a) und b) einen Volumenanteil von 20 % und die Ethanol-Lösung b) einen Volumentanteil von 80 % an der Gesamtlösung aus a) und b) hat.

In diese Gesamtlösung aus a) und b) wird der Fluorophor, z.B. HPTS (8-Hydroxy-1,3,6- Trisulfonsäure) gegeben und gelöst, wobei der Fluorophor dann einen Anteil von 0,1 bis 0,5 Gewichtsprozent an der Gesamtlösung aus a) und b) hat.

Die Reagenzien zur Herstellung der Lösung 2 können sein:

d) Ethanol (99,5 %- ig)
wird gemischt mit

e) Toluol (99,5 %- ig) zu einer Gesamtlösung aus d) und e) wobei Ethanol an der Gesamtlösung einen Volumenanteil von 40 % und Toluol an der Gesamtlösung einen Volumenanteil von 60 % hat.

In diese Gesamtlösung aus d) und e) wird Ethyl-Zellulose (Ethoxyl Gehalt 48 %) gegeben und gelöst, wobei der Anteil von Ethyl-Zellulose dann einen Anteil von 0,59 Gewichtsprozent an der Gesamtlösung von d) und e) hat.

Zur Herstellung der Lösung 3 werden die Lösungen 1 und 2 im Verhältnis 1 zu 2,125 gemischt. Nach dem Tauchbeschichtungsverfahren (Dip-Coating) wird die Optode getrocknet, in Milli-Q-Wasser gespült und kann getrocknet aufbewahrt werden.

Für das Tauchbeschichtungsverfahren können alle nach dem Stand der Technik bekannten Bedingungen gewählt werden. Als besonders geeignet hat sich ein 1-bis 3-faches ca. 10-sekündiges Eintauchen des Trägermaterials in die fluoreszenzfarbstoffhaltige Lösung erwiesen, wobei nachfolgend das Trägermaterial mit einer Geschwindigkeit von ca. 1 cm/Sekunde aus der Lösung herausgezogen wurde.

Als Fluorophore und Polymere sind grundsätzlich auch alle nach dem Stand der Technik bekannten Verbindungen geeignet, die in den jeweils bekannten Lösungsmitteln gelöst werden können.

**2. Ausführungsbeispiel:**

Ermittlung der optischen Eigenschaften Transmissivität, Auflösungsvermögen (optische Trennschärfe) und Grauwert-Kontrast von zwei Optoden (zum Einen der erfindungsgemäßen transparenten Optode, im Vergleich mit einer handelsüblichen Optode), die quantifiziert und miteinander und mit einer Referenzmessung (ohne Optode) in relevanten Bereichen des Wellenlängenspektrums verglichen wurden.

Die Messprinzipien der hier erfolgten Quantifizierung der optischen Eigenschaften von Optoden bestehen

a) für die Quantifizierung der Transmissivität in der Messung der Absorption (Differenz aus einfallendem abzüglich ausfallendem Licht) und Berechnung der Transmissivität nach der Formel

$$\text{Transmissivität der Optode} = \text{Eingangsintensität des Lichts} - \text{Absorption des Lichts;}$$

und

b) für die Quantifizierung des Auflösungsvermögens, in der Messung des Durchmessers eines fotografierten Punktes, da eine diffuse (schlecht aufgelöste) fotografische Aufnahme zu größeren Durchmessern in den Aufnahmen führt; und

c) für die Quantifizierung des Grauwert-Kontrasts, im Vergleich von Grauwerten in schwarzen Bereichen des fotografierten Objektes (hier verwendeter Standard) mit weißen Bereichen des fotografierten Objekts (hier verwendeter Standard) durch Bildung der Differenz.

Bei der Untersuchung der gemäß Unterpunkt b) Quantifizierung des Auflösungsvermögens, wurde analog zur Methode der Punktantwort (engl.: point spread function) gearbeitet. Burger und Burge (2008) schreiben: "... diese Methode wird zur Messung des Verhaltens optischer Systeme (wie z.B. Linsen) genutzt, wobei eine Punktlichtquelle als Impuls dient, und die resultierende Verteilung der Lichtenergie Punktantwort genannt wird." Die im Folgenden beschriebenen Versuche erfolgten in zwei Versuchswiederholungen an verschiedenen Optoden und mit je 15 Messwiederholungen an der jeweiligen Optode bzw. fotografischen Aufnahme.

Zur Erzielung eines geeigneten quantitativen Maßes für das Auflösungsvermögen sowie für den Grauwert-Kontrast wurden die Optoden in einen mit 20 ml deionisiertem Wasser (Milli-Q, Millipore Corporation) gefüllten Deckel einer Petrischale (120 * 120 * 17 mm, Greiner Petrischalen mit Nocken, quadratisch, Greiner Bio-One Artikel-Nr.: 688102) gelegt, und der Boden der Petrischale umgedreht so in den Deckel gelegt, so dass die Optoden planar fixiert waren. Der Deckel der Petrischale wurde danach auf einen Standard gestellt, welcher aus einem hochauflösenden Ausdruck auf Druckerpapier bestand, bei dem verschiedene Symbole (Punkte) der Schriftart "Times new Roman" der Software Microsoft Word in den Schriftgrößen 1, 2, 4, 8, 16, 32, 64 und 128 gedruckt waren. Derselbe Aufbau wurde auch für den Fall verwendet, in dem keine Optode in der Petrischale lag. Dieser Fall diente als Referenz. Die Optoden wurden durch das Wasser sowie die den Boden der Petrischale hindurch mit einer CMOS-Kamera (Flea BW by Point Grey Research Inc., Vancouver, Canada) in Graustufen fotografiert. Die verwendeten Einstellungen für die fotografischen Aufnahmen erfolgten analog zu üblichen Aufnahmen unter Verwendung der Methode DISP oder GROWSCREEN root. Die Aufnahmen bei 880 nm erfolgten ohne elektronische Signalverstärkung, einer Blende (engl. Shutter current) von 500 (von möglichen 0 bis 1210), einer Belichtungszeit (engl. Exposure current) von 1 (von möglichen 0 bis 1023). Eine digitale Bildmittelung erfolgte über 10 Bilder. Die Aufnahmen bei sichtbarem Licht erfolgten in derselben Weise, mit Ausnahme der Verwendung einer Blende von 50. Es wurde eine Standard-Objektiv-Linse (25 mm; Cosmicar/Pentax; The Imaging Source, Bremen, Germany) ohne Filter beziehungsweise bei den Infrarot-Aufnahmen bei 880 nm ein Infrarot-Passtrough-Filter (880 nm; Edmund Optics, Karlsruhe, Germany) verwendet. Eine konstante Ausleuchtung erfolgte entweder mittels einer Halogenlampe (zur Messung der optischen Eigenschaften der Optoden im sichtbaren Licht bei ca. 400 - 800 nm) oder mittels Zuhilfenahme von Infrarot-LEDs (880 nm; Conrad Electronics, Hirschau, Germany). Die fotografischen Aufnahmen wurden mit der Software "Root leaf aquisition", Schmundt et al. (1998) eingestellt und im Multi-Tiff-Format gespeichert. Danach wurden die fotografischen Aufnahmen mit der Software IrfanView (http://www.irfanview.com/) geöffnet und mit den Werkzeugen der Software IrfanView vermessen.

Zur Vermessung des Auflösungsvermögens wurde das Messwerkzeug "Measure tool" der Software IrfanView (www.irfanview.com) verwendet. Start- und Endpunkte der Messung der Durchmesser des Punktes der Schriftgröße 128 wurden dadurch festgelegt, dass ab einer Veränderung des Grauwertes von mehr als 3 Grauwertstufen im Vergleich zum Hintergrund der jeweilige Durchmesser gemessen wurde.

Zur Vermessung des Grauwert-Kontrasts wurde der Grauwert mit der Software IrfanView gemessen, wobei die Messpunkte entweder mittig im Punkt der Schriftgröße 128 oder mittig zwischen den Punkten der Schriftgröße 128 und 64 gewählt wurden. Danach wurde die Differenz der Grauwerte berechnet.

Zur Erzielung eines geeigneten quantitativen Maßes für die Transmissivität wurde jeweils ein Streifen der Optode in eine Kristallglasküvette planar eingebracht und die Küvette mit 1 ml deionisiertem Wasser (Milli-Q, Millipore Corporation) gefüllt. Als Referenz diente eine Kristallglasküvette, die mit 1 ml deionisiertem Wasser (Milli-Q, Millipore Corporation) gefüllt wurde. Die Messung erfolgte mit einem Zweistrahl-Spektralfotometer (UVIKON xl, Bio-Tek Instruments). Eine fotometrische Referenzmessung kann 100 % gesetzt werden. Die Kurve, die dieser Messung entspricht, würde bei der in Figur 1 gewählten Darstellungsweise (als relative Transmission bezogen auf die Referenz) über den gesamten Bereich des Spektrums einen Wert von 100 % besitzen.

**Ergebnisse:**

In der folgenden Tabelle 6 sind die in den vorangehend beschriebenen Messverfahren ermittelten fotographischen Aufnahmen abgebildet. Die beiden zu vergleichenden Optoden sowie die Leermessung mit demselben Messaufbau kann zur Gewinnung eines ersten Eindrucks verglichen werden.

Tabelle 6: Fotographische schwarz-weiß Aufnahmen von Punkten des Schrifttyps Times New Roman bei verschiedenen Punktgrößen von Punktgröße 1 bis Punktgröße 128

| a) | b) | c) |
|---|---|---|
| Ohne Optode<br><br>im sichtbaren Licht<br>(ca. 400 - 800 nm) | Erfindungsgemäße Optode<br><br>im sichtbaren Licht<br>(ca. 400 - 800 nm) | Optode nach Stand der Technik<br>im sichtbaren Licht<br>(ca. 400 - 800 nm) |
| d) | e) | f) |
| Ohne Optode<br><br>bei 880 nm | Erfindungsgemäße Optode<br><br>bei 880 nm | Optode nach Stand der Technik<br>bei 880 nm |

Tabelle 6 zeigt fotographische schwarz-weiß Aufnahmen von a) der Leermessung (Referenz; Ohne Optode) mit Belichtung mit sichtbarem Licht, b) der erfindungsgemäßen Optode mit Belichtung mit sichtbarem Licht, sowie c) einer pH-Optode nach dem Stand der Technik mit Belichtung mit sichtbarem Licht jeweils ohne Verwendung eines Filters. Darunter fotographische schwarz-weiß Aufnahmen d) der Leermessung (Referenz; Ohne Optode) mit Belichtung mit Licht der Wellenlänge 880 nm, e) der erfindungsgemäßen Optode mit Belichtung mit Licht der Wellenlänge 880 nm, sowie f) einer pH-Optode nach dem Stand der Technik mit Belichtung mit Licht der Wellenlänge 880 nm jeweils unter Verwendung eines Infrarot- Passthrough-Filters.

Die erfindungsgemäße Optode erreicht Transmissivitätswerte, die im Wellenlängen-Spektrum zwischen 300 und 900 nm oberhalb von 90 % liegen. Im nahinfraroten Bereich des Spektrums (700 bis 900 nm) erreicht die neue Optode eine Transmissivität von 100 %. Der Bereich nahinfraroten Lichts ist insbesondere dann von besonderer Bedeutung, wenn nahinfrarotes Licht (> 800 nm) eingesetzt werden soll, welches das Pflanzenwachstum nicht beeinflusst (Schmundt et al. 1998). Die im Handel erhältliche Optode erzielt im Spektrum von 300 bis 900 nm Werte von maximal 65 %.

Da die Transmissivität für die Anwendung im Sinne der Erfindung nicht allein relevant ist, sondern auch die Parameter Auflösungsvermögen sowie Grauwert-Kontrast zur Erzielung einer maximalen Bildgüte von Bedeutung sind, wurden diese Parameter für eine im Handel erhältliche pH-Optode sowie für die neue Optode bestimmt.

Die erzielte Trennschärfe (Auflösungsvermögen) der neuen Optode war sowohl unter Verwendung sichtbaren Lichts, als auch unter Verwendung nahinfraroten Lichts (880 nm), nur wenig und nicht signifikant schlechter, als die erzielte Auflösungsvermögen, welche erzielt wurde, wenn keine Optode in den Strahlengang (Petrischale) gelegt wurde (4 % Verschlechterung bei Belichtung mit Licht im sichtbaren Bereich des Spektrums; 1% Verschlechterung bei Belichtung mit Licht der Wellenlänge von 880 nm). Die im Handel erhältliche Optode verschlechterte die erzielten Auflösungsvermögen im Vergleich zur Referenz (Messung ohne Optode in der Sichtachse) unter Verwendung von Licht des sichtbaren Spektrums um 27 %, und bei Belichtung mit nahinfrarotem Licht der Wellenlänge 880 nm um 24 %. (s.a. Tabellen 4 und 5)

Die Verschlechterung des Grauwert-Kontrasts im Vergleich zum erzielten Grauwert-Kontrast ohne Optode im Strahlengang beträgt bei Verwendung sichtbaren Lichts bei der neuen Optode 24 %, und 6 % bei Verwendung nahinfraroten Lichts (880 nm). Bei der im Handel erhältlichen Optode beträgt die Verschlechterung des Grauwert-Kontrasts 93 % bei Verwendung sichtbaren Lichts und 89 % bei Verwendung nahinfraroten Lichts (880 nm) (s. a. Tabellen 2 und 3). Somit besitzt die neue Optode im Sinne der Erfindung deutlich und signifikant bessere optische Eigenschaften als die im Handel erhältliche Optode. Im Gegensatz zur im Handel erhältlichen Optode ist die neue Optode nachweislich zur Anwendung in nach dem Stand der Technik bekannten bildgebenden und bildanalytischen Verfahren wie beispielsweise DISP und GROWSCREEN root geeignet.

**3. Ausführungsbeispiel:**

Kontinuierliche und simultane Erfassung des Wurzelwachstums sowie der Wurzelsystemarchitektur sowie der Wachstumsdynamik zum einen und simultane kontinuierliche Erfassung des Rhizosphären-pH-Wertes von monokotylen oder dikotylen Pflanzen, wie zum Beispiel *Nicotiana tabacum* oder *Arabidopsis thaliana,* die auf Boden als Kultursubstrat kultiviert werden, welches sich in Rhizotronen als Kultivierungsgefäß mit mindestens einer transparenten Sichtscheibe befindet.

Die in diesem Beispiel verwendete Optode ist hinsichtlich ihrer Transparenz mit Sichtscheiben aus Glas oder Kunststoff vergleichbar, und ermöglicht eine Auswertung beispielsweise mit der Software GROWSCREEN-Root oder der Software GROW Map-Root. Andere bekannte Auswerteverfahren sind jedoch ebenfalls möglich.

Bereitung des Kultursubstrats und Kultivierung der Pflanzen:

Als Kulturgefäße können beispielsweise Rhizitrone eingesetzt werden. Die Rhizotrone werden z.B. mit konventioneller Anzuchterde gefüllt. Danach wird die Sichtscheibe entfernt und von anhaftendem Boden gesäubert. Auf die im Rhizotron freigelegte Bodenfläche wird die planare Optode mit der Seite, die mit dem Fluorophor beschichtet ist, auf den Boden gelegt. Danach wird die Sichtscheibe auf die Optode gelegt und wieder befestigt. Alternativ kann die planare Optode auch an die entsprechende Stelle der Sichtscheibe mit beispielsweise Silikonfett angeheftet werden bevor der Boden in das Rhizotron eingefüllt wird. Somit würde es vermieden werden, dass beim Öffnen eines bereits gefüllten Rhizotrons die Bodenstruktur verändert wird.

Die Rhizotrone werden in einem Winkel von z.B. 45° in Richtung der Sichtscheibe dauerhaft gelagert. Die Samen der zu untersuchenden Pflanzen werden in das Rhizotron gesät und bei geeigneten, artspezifischen Kultivierungsbedingungen kultiviert.

Erfassung der zu messenden Parameter, Kameraeigenschaften

Eine optischen Erfassungseinheit, beispielsweise eine CCD-Kamera oder ähnliches wird zur Sichtscheibe des Rhizotrons in einem definierten Abstand und Winkel arretiert, um reproduzierbare Aufnahmen zu erstellen. Die Beleuchtungseinheit, in der Regel monochromatische LEDs, werden analog zur optischen Erfassungseinheit ebenfalls arretiert. Beleuchtungs- und Erfassungseinheit werden über einen PC gesteuert ausgelöst, um in definierten Abständen Aufnahmen des Wurzelsystems und der Rhizosphären-pH-Dynamik zu erfassen.

Die Erfassung des Wachstums des Wurzelsystems erfolgt beispielsweise mit Hilfe der Software ROOTFIND und "GROWSCREEN" und basiert in der Regel auf Bildern der optischen Erfassungseinheit im bmp (bitmap) Format. Eine vorgelagerte Konvertierung der Bilder in S/W (schwarz/weiß) Format etc. ist dabei möglich, sofern die nachgelagerte Auswertungssoftware dies erfordert. Dabei werden z.B. die Länge und die Anzahl der sichtbaren Wurzeln automatisch erfasst und in gesonderten Datenfiles abgelegt. Die Kalibrierung der Aufnahmen erfolgt über den Abgleich der gezählten Wurzelpixel mit der Anzahl der Pixel von Objekten deren Länge und Dicke bekannt ist und die ebenfalls im Bild erfasst sind (z.B. Kapillaren, etc.).

Die Erfassung der Rhizospähren pH-Dynamik wird über den Abgleich der erzeugten Bilder (z.B. TIFF oder RAW Format) mit zuvor erstellten Kalibrationsdaten realisiert. Als konventionelle und kommerziell erhältliche Auswertungssoftware kann hier die "Image processing toolbox" von Matlab oder auch Photoshop dienen. Die Fehlerkorrektur der erzeugten Bilder kann beispielsweise analog zur Beschreibung von Strömberg & Hulth (2005) erfolgen.

Hierbei werden zu Beginn der Aufnahmen ein oder mehrere Dunkelbilder erzeugt, um das "Schwarz-Rauschen" aus der späteren Bildantwort herauszurechnen. Dazu wird ein Bild erzeugt, bei dem die Objektivkappe auf dem verwendeten Objektiv verbleibt. Um das systematische Rauschen durch Mehrfachaufnahmen zu reduzieren, wird das Schwarzrauschen von den Bildern jeder Wellenlänge abgezogen.

Kalibrierung der Optode

Entsprechend den Ausführungen von Hakonen & Hulth (2007) kann die pH - Optode z.B. wie folgt kalibriert werden (Abwandlungen hiervon sind ebenfalls möglich):

Das HPTS Fluoreszenz Ratio folgt einem sigmoiden Verlauf in Abhängigkeit des pH Wertes. Daher kann eine vier-Parameter sigmoide Logistische Funktion (Gleichung 1) verwendet werden. Um eine Drift über die Zeit (t) zu korrigieren, werden die Kalibrierdaten vor der Versuchsreihe (Call) mit denen nach der Versuchsreihe (Cal2) verknüpft. (Gleichung 1).

$$R_{F1,F2}\,(pH,\,t) = \alpha 1(t) + (\alpha 2(t) - \alpha 1(t))/(1 + 10exp(pH - \alpha 3(t))\alpha 4(t)\,) \qquad \underline{Gleichung\ 1}$$

Wobei jeder der vier zeitabhängigen Parameter gemäß Gleichung 2 variiert:

$$\alpha i(t) = \alpha i,Cal1 + ((\alpha i,Cal1 - \alpha i,Cal2)/\,\Delta t(Cal1,Cal2))\,{}^{*}\,t \qquad \underline{Gleichung\ 2}$$

$\alpha 1$ und $\alpha 2$ beschreiben das asymptotische Minimum und Maximum der sigmoiden Funktion. $\alpha 3$ ist der apparente pKa4 von HPTS (d.h. der Wendepunkt der sigmoidalen Funktion), und $\alpha 4$ ist eine Konstante, die die Steigung der Funktion zwischen $\alpha 1$ und $\alpha 2$ beschreibt.

Die ratiometrische pH Antwort ($R_{F1,F2}$) des Sensors wird aus dem Verhältnis zwischen F1 und F2 gebildet (i.e., $R_{F1,F2}$ = F1/F2). Hierzu werden z.B. *"dual excitation"* (ex) und *"dual emission"*(em) Eigenschaften von HPTS zunutze gemacht (z.B. Fl, ex/em: 405/440nm und F2, ex/em: 465/510 nm). Darüber hinaus kann die sogenannte *"time correlated pixel-by-pixel* "Kalibrierung (Zeitkorrelierte Pixel für Pixel Kalibrierung) angewendet werden (ebenfalls beschrieben von Strömberg und Hulth 2005).

Zur Kalibration werden mehrere Lösungen unterschiedlichen pH-Wertes (in der Regel vier) mit Hilfe von Mischungen aus zwei Phosphatpuffern von pH 6.00 und 8.50 hergestellt (Ionenstärke; ITot = 3.0mM und $[PO_4^{3-}]$Tot = 1.95 mM). Die zu kalibrierende Optode wird in ein Gefäß mit der jeweiligen Pufferlösung eingetaucht und die ratiometrische Antwort durch ein Sichtfenster oder durch das Glas des Becherglases, etc. mit der Erfassungseinheit erfasst. Das Ergebnis der Kalibrierung kann für jeden Pixel einzeln, oder aber als Summenantwort registriert und im späteren Verlauf weiter verarbeitet werden.

Die Wurzelbilder und pH Bilder, die während des Experimentes erzeugt werden, können dann mit geeigneten Bildbearbeitungsprogrammen (z.B. Corel Draw, Photoshop, ImageJ, etc.) überlagert werden und so Zusammenhänge zwischen pH-Wert und Wurzelarchitektur aufgeklärt werden.

Die im Rahmen der Erfindung verwendeten Begriffe werden wie folgt definiert:

1. Auflösungsvermögen:

(Synonym: Bildschärfe, Trennschärfe). Fähigkeit eines optischen Gerätes, zwei eng benachbarte Objekteinzelheiten voneinander zu trennen, d.h. deutlich als zwei getrennte Gebilde wiederzugeben. Bei hoher Auflösung können feine Einzelheiten in den Objekten erkannt werden. Das Auflösungsvermögen ist objekt- und kontrastabhängig, daher sind Zahlenangaben über das Auflösungsvermögen nur als ungefähre Anhaltspunkte zu werten. (Mütze et al. 1972)

2. Bildanalyse:

Als Bildanalyse wird die systematische Analyse des Bildinhaltes durch visuelle Bildinterpretation bezeichnet.
(Geoinformatik-Service der Universität Rostock, 2008, Professur für Geodäsie und Geoinformatik (GG) Universität Rostock; www.geoinformatik.unirostock.de)

3. Bildgebung:

(Synonym: Bildgebendes Verfahren) Ein bildgebendes Verfahren erzeugt aus Messgrößen eines realen Objektes ein Abbild, wobei die Messgröße oder eine daraus abgeleitete Information ortsaufgelöst und über Helligkeitswerte oder Farben kodiert visualisiert wird. (www.wikipedia.org).

4. Bildgüte:

(Synonym: Bildqualität, Abbildungsqualität). Maß der objekttreuen Wiedergabe bei der optischen Abbildung.

Meist subjektiv beurteilt, kann aber auch durch Abbildung einer geeigneten Vorlage (Test) beurteilt werden. Kriterien für die Bildgüte sind oftmals Auflösungsvermögen und Kontrastwiedergabe. (Mütze et al. 1972)

5. Bildverarbeitung:

Als Bildverarbeitung werden alle Verfahren bezeichnet, mit denen Bilder bearbeitet und verändert werden, d.h. die Aufbereitung und Analyse von Bild- bzw. Rasterdaten. Bezeichnet einen Satz digitaler Methoden, die verwendet werden zum Erstellen, Analysieren, Verbessern, Interpretieren oder Darstellen von Bilddaten oder Rasterdaten.
(Geoinformatik-Service der Universität Rostock, 2008, Professur für Geodäsie und Geoinformatik (GG) AUF Universität Rostock; www.geoinformatik.unirostock.de)

6. Diffuses Licht:

Gestreutes Licht. (Mütze et al. 1972)

7. Grauwert:

Helligkeits- oder Intensitätswert in der Bildverarbeitung.
Unter Grauwert versteht man die einem Bildpunkt (Pixel) zugeordnete Zahl, z.B. in Rasterdaten oder in der digitalen Bildverarbeitung. Je nach Anzahl der Bits, die ein Grauwert einnehmen kann, unterscheidet man Binärbild (1 Bit, Zustände 0 und 1), Grauwertbild (8 Bit, Zustände zwischen 0 und 255) und Farbbild (3*8 Bit mit jeweils Zuständen zwischen 0 und 255). Diesen Werten sind zur Darstellung auf einem Bildschirm Einträge einer Farbtabelle (LUT) zugeordnet, d.h. die Werte werden als Indizes einer Farbtabelle interpretiert. (Geoinformatik-Service der Universität Rostock, 2008, Professur für Geodäsie und Geoinformatik (GG) AUF Universität Rostock; www.geoinformatik.uni-rostock.de)

8. Kontrast, fotometrischer:

Der fotometrische Kontrast kennzeichnet den Helligkeitsunterschied zwischen zwei leuchtenden Flächen: (Mütze et al. 1972)

9. Kontrast, optischer:

Sammelbezeichnung für den Helligkeitskontrast und den Farbkontrast. Siehe auch fotometrischer Kontrast. (Mütze et al. 1972)

10. Monomer:

Einzelbaustein-Molekül eines Polymers. Monomere sind niedermolekulare, reaktionsfähige Moleküle, die sich zu molekularen Ketten oder Netzen, zu unverzweigten oder verzweigten Polymeren, zusammenschließen können. (wikipedia)

11. Optode:

(Synonym: Optrode) Optochemischer Sensor. (Kessler 2006)

12. Planar:

Flach, eben. (Duden 1974).

13. Polymer:

Chemische Verbindung aus Ketten- oder verzweigten Molekülen (Makromolekülen), die wiederum aus gleichen oder gleichartigen Einheiten (den sogenannten Monomeren) bestehen.

14. Strahlengang:

Verlauf der Lichtstrahlen in irgendeiner optischen Anordnung. (Mütze et al. 1972)

**EP 2 594 601 B1**

15. Streuung:

Ablenkung von Licht bzw. Strahlung von seiner ursprünglichen Richtung durch kleine Teilchen. (Mütze et al. 1972)

16. Transmission:

Durchgang von Strahlung durch ein Medium ohne Änderung der Frequenz in den monochramtischen Strahlenanteilen. Bei allen glasklaren Stoffen ist gerichtete Transmission, d.h. ohne Streuung, gegeben. Im Gegensatz dazu gibt es auch gestreute Transmission, bei der der Körper die eintreffende Strahlung in verschiedenen Richtungen wieder austreten lässt (Streuung), und dabei die optischen Gesetze der Brechung jedoch nicht in Erscheinung treten. (Mütze et al. 1972)

17. Transmissivität:

Eigenschaft der Durchlässigkeit von Medien. Eigenschaft in Bezug auf die physikalische Größe der Transmission. (wikipedia)

18. Transparenz:

Durchlässigkeit für Licht. (Duden 1974)

19. Trennschärfe:

(synonym: angulare Sehschärfe, Auflösungsvermögen) Das Vermögen Objekte so scharf zu sehen, dass Einzelheiten gut erkannt und aufgelöst werden können. Messbar in Bogensekunden (synonym Winkelsekunde; Maßeinheit des Winkels). 60 Winkelsekunden entsprechen einer Winkelminute, 60 Winkelminuten entsprechen einem Grad. Die Auflösung von 1' (einer Winkelminute) entspricht einer Ortsauflösung von etwa 1,5 mm bei 5 m Abstand. Je kleiner die Winkel-Sehschärfe ist, desto besser ist die Sehschärfe. (Mütze et al. 1972)

**Literaturliste**

Blossfeld S and Gansert D (2007) A novel non-invasive optical method for quantitative visualization of pH dynamics in the rhizosphere of plants. Plant, Cell and Environment 30, 176-186.

Blossfeld S, Perriguey J, Sterckeman T, Morel J-L and Lösch R (2010) Rhizosphere pH dynamics in trace-metal-contaminated soils, monitored with planar pH optodes. Plant and Soil 330, 173-184.

Burger W, Burge MJ (2008) Digital image processing. An Algorithmic Introduction Using Java. Springer Verlag. p 104

Duden (1974) Der große Duden. Rechtschreibung, Wörterbuch und Leitfaden der Deutschen Rechtschreibung. Dudenverlag

Frederiksen S M and Glud RN (2006) Oxygen dynamics in the rhizosphere of Zostera marina: A two-dimensional planar optode study. Limnol. Oceanogr. 51, 1072-1083.
Geoinformatik-Service der Universität Rostock, 2008, Professur für Geodäsie und Geoinformatik (GG) AUF Universität Rostock; www.geoinformatik.unirostock.de

Glud RN h, Santegoeds C M, Beer D D, Kohls O and Ramsing N B (1998) OxyGen dynamics at the base of a biofilm studied with planar optodes. Aquatic Microbial Ecology 14, 223-233.

Hakonen A, Hulth S (2007) A high-precision ratiometric fluorosensor for pH: Implementing time-dependent non-linear calibration protocols for drift compensation. Anal Chim Acta 606:63-71

Hakonen A and Hulth S (2008) A high-precision ratiometric fluorosensor for pH: Implementing time-dependent non-linear calibration protocols for drift compensation. An lytica Chimica Acta 606, 63-71.

Hakonen A, Hulth S and Dufour S (2010) Analytical performance during ratiometric long-term imaging of pH in bioturbated sediments. Talanta 81, 1393-1401.

Holst G and Grunwald B 2001 Luminescence lifetime imaging with transparent oxygen optodes. Sensors and Actuators B: Chemical 74, 78-90.

Holst G, Kohls O, Klimant I, König B, Kühl M and Richter T (1998) A modular luminescence lifetime imaging system for mapping oxygen distribution in biological samples. Sensors and Actuators B: Chemical 51, 163-170.

Hulth S A, R. C., Engström P and Selander E (2002) A pH Plate Fluorosensor (Optode) for Early Diagenetic Studies of Marine Sediments. Limnol Oceanogr 47, 212-220.

Jähne B., Haußecker H., Geißler P. (1999) Handbook of Computer Vision and Applications. Signal Processing and Pattern Recognition. Volume 2. ACADEMIC PRESS, London, UK.

Kessler RW (2006) Prozessanalytik. Strategien und Fallbeispiele aus der industriellen Praxis. Wiley, Weinheim, p 384

Mütze K, Foitzig L, Krug W, Schreiber G (1972) ABC der Optik. Verlag Werner Dausien, Hanau, Deutschland

Nagel KA (2006) Abhängigkeit des Wurzelwachstums vom Lichtregime des Sprosses und deren Modifikation durch Nährstoffe sowie im Gravitropismus. Dissertation Universität Düsseldorf, Schriften des Forschungszentrums Jülich. Reihe Umwelt, Environment Band/Volume 63

Nagel KA, Kastenholz B, Jahnke S, van Dusschoten D, Aach T, Mühlich M, Truhn D, Scharr H, Terjung S, Walter A, Schurr U (2009) Temperature responses of roots: impact on growth, root system architecture and implications for phenotyping. Funct Plant Biol 36:947-959

Oguri K, Kitazato H and Glud R N (2006) Platinum octaetylporphyrin based planar optodes combined with an UV-LED excitation light source: An ideal tool for high-resolution $O_2$ imaging in $O_2$ depleted environments. Marine Chemistry 100, 95-107.

Precht E, Franke U, Polerecky L, Huettel M (2004) Oxygen dynamics in permeable sediments with wave-driven pore water exchange. Limnol Oceanogr 49:693-705

Ritzhaupt-Kleissl E (2007) Transparente Polymer-Nanokomposite für Anwendungen in der Mikrooptik. Wissenschaftliche Berichte, Forschungszentrum Karlsruhe, p 90

Schmundt D, Stitt M, Jähne B, Schurr U (1998) Quantitative analysis of the local rates of growth of dicot leaves at a high temporal and spatial resolution, using image sequence analysis. Plant Journal 16:505-514

Schröder CR (2006) Luminescent planar single and dual optodes for timeresolved imaging of pH, $pCO_2$ and $pO_2$ in marine systems. Dissertation Universität Regensburg, Fakultät für Chemie und Pharmazie

Staal M, Borisov SM, Rickelt LF, Klimant I, Kühl M (2011) Ultrabright planar optodes for luminescence life-time based microscopic imaging of $O_2$ dynamics in biofilms. J. Microbiol Methods 85: 67-74

Stahl H, Glud A, Schröder CR, Klimant I, Tengberg A, Glud RN (2006) Timeresolved pH imaging in marine sediments with a luminescent planar optode. Limnol Oceanogr: Methods 4:336-345

Strömberg N, Hulth S (2005) Assessing an imaging ammonium sensor using time correlated pixel-by-pixel calibration. Anal Chim Acta 550:61-68

Walter A, Silk WK, Schurr U (2009) Environmental effects on spatial and temporal patterns of leaf and root growth. Annu Rev Plant Biol 60:279-304

Wolfbeis, O.S. (1995) Optoden und Fluorophore. Nachrichten aus Chemie, Technik und Laboratorium, 43: 313-316. Zhu QZ, Aller RC, Fan YZ (2005) High-performance planar pH fluorosensor for two-dimensional pH measurements in marine sediment and water. Environ Sci Technol 39:8906-8911

Zhu QZ, Aller RC, Fan YZ (2006) A new ratiometric, planar fluorosensor for measuring high resolution, two-dimensional pCO2 distributions in marine sediments. Mar Chem 101:40-53http://www.irfanview.com/ www.wikipedia.org

**Patentansprüche**

1. Optode, umfassend folgende Komponenten:

   a) ein Trägermaterial umfassend eine transparente Celluloseacetat-Folie oder Cellulosediacetatfolie
   b) eine Lösung 3, gemischt aus einer Lösung 1 mit einer Lösung 2, wobei Lösung 1 mindestens ein in einem Lösungsmittel gelöstes 8-Hydroxy-1,3,6-Trisulfonsäure Fluorophor umfasst und Lösung 2 ein in einem Lösungsmittel gelöstes Ethylcellulose-Polymer umfasst, wobei Lösung 3 auf dem Trägermaterial immobilisiert ist,

   **dadurch gekennzeichnet,**
   **dass** die Optode ab einer Wellenlänge von 280 nm eine Transmissivität von mehr als 90 % aufweist.

2. Optode nach Anspruch 1,
   **dadurch gekennzeichnet,**
   **dass** die Optode mindestens ein immobilisiertes Fluorophor aufweist, das in Abhängigkeit der Quantität der zu messenden chemischen und/oder physikalischen Parameter fluoresziert.

3. Optode nach einem der Ansprüche 1 bis 2,
   **dadurch gekennzeichnet,**
   **dass** die Optode ab einer Wellenlänge von 725 nm eine Transmissivität von mehr als 99 % aufweist.

4. Optode nach einem der Ansprüche 1 bis 3,
   **dadurch gekennzeichnet,**
   **dass** die Optode eine Verringerung des Auflösungsvermögens von 4 % bei Belichtung mit Licht im sichtbaren Bereich des Spektrums aufweist und eine Verringerung des Auflösungsvermögens von 1 % bei Belichtung mit Licht im nahinfraroten Bereich des Spektrums aufweist.

5. Optode nach einem der Ansprüche 1 bis 4,
   **dadurch gekennzeichnet,**
   **dass** die Optode eine Verringerung des Grauwert-Kontrasts um 24 % bei Belichtung mit Licht im sichtbaren Bereich des Spektrums und um 6 % bei Belichtung mit Licht im nahinfraroten Bereich des Spektrums aufweist.

6. Optode nach einem der Ansprüche 1 bis 5,
   **dadurch gekennzeichnet,**
   **dass** sie planar ist.

7. Verfahren zur Herstellung einer Optode gemäß einem der Ansprüche 1 bis 6, umfassend folgende Verfahrensschritte:

   a) Herstellung einer Lösung 1 umfassend mindestens ein gelöstes 8-Hydroxy-1,3,6-Trisulfonsäure Fluorophor
   b) Herstellung einer Lösung 2 umfassend ein gelöstes Ethylcellulose-Polymer
   c) Mischen der Lösungen 1 und 2 zur Herstellung der Lösung 3
   d) Beschichten einer transparenten Celluloseacetatfolie oder Cellulosediacetatfolie mit der Lösung 3
   e) Trocknung der Optode
   f) Reinigung der Optode

8. Verfahren nach Anspruch 7,
   **dadurch gekennzeichnet,**
   **dass** zur Herstellung der Lösung 1 das Fluorophor in einer Lösung bestehend aus einer Tetraoctylammoniumhydroxid-Lösung und einer alkoholischen Lösung gelöst wird.

9. Verfahren nach einem der Ansprüche 7 bis 8,
   **dadurch gekennzeichnet,**
   **dass** zur Herstellung der Lösung 2 das Polymer in einem Lösungsmittel, bestehend aus einer Mischung einer alkoholischen Lösung mit einem unpolaren/wenig polaren Lösungsmittel, gelöst wird.

**10.** Verfahren nach einem der Ansprüche 7 bis 9,
**dadurch gekennzeichnet,**
**dass** das Beschichten des Trägermaterials gemäß d) durch Tauchbeschichungsverfahren, Aufsprühverfahren, Aufdruckverfahren, Messerrakelbeschichtungsverfahren oder Rotationsbeschichtungsverfahren erfolgt.

**Claims**

**1.** Optode, comprising the following components:

   a) A carrier material, comprising a transparent cellulose acetate film or cellulose diacetate film,
   b) a solution 3, mixed from a solution 1 with a solution 2, wherein solution 1 comprises at least one 8-hydroxy-1,3,6-trisulfonic acid fluorophore dissolved in a solvent, and solution 2 comprises an ethyl cellulose polymer dissolved in a solvent, wherein solution 3 is immobilised on the carrier material,

   **characterized in that**
   from a wavelength of 280 nm onwards the optode exhibits a transmissivity of more than 90%.

**2.** Optode according to claim 1,
**characterized in that**
the optode comprises at least one immobilised fluorophore, which fluoresces as a function of the quantity of the chemical and/or physical parameters which are to be measured.

**3.** Optode according to any one of claims 1 to 2,
**characterized in that**
from a wavelength of 280 nm onwards the optode exhibits a transmissivity of more than 90%.

**4.** Optode according to any one of claims 1 to 3,
**characterized in that**
the optode exhibits a reduction in the resolution capacity of 4% when illuminated with light in the visible range of the spectrum and a reduction in the resolution capacity of 1% when illuminated with light in the near-infrared range.

**5.** Optode according to any one of claims 1 to 4,
**characterized in that**
the optode exhibits a reduction in grey value contrast of 24% illuminated with light in the visible range of the spectrum and 6% when illuminated with light in the near-infrared range.

**6.** Optode according to any one of claims 1 to 5,
**characterized in that**
it is planar.

**7.** Method for producing an optode according to any one of claims 1 to 6, comprising the following method steps:

   a) Producing a solution 1 comprising at least one dissolved 8-hydroxy-1,3,6-trisulfonic acid fluorophore,
   b) producing a solution 2 comprising at least one dissolved ethyl cellulose polymer,
   c) mixing the solutions 1 and 2 to produce the solution 3,
   d) coating a transparent cellulose acetate film or cellulose diacetate film with the solution 3,
   e) drying the optode,
   f) cleaning the optode

**8.** Method according to claim 7
**characterized in that**
for producing the solution 1, the fluorophore is dissolved in a solution consisting of a tetraoctyl ammonium hydroxide solution and an alcoholic solution.

**9.** Method according to any one of claims 7 to 8,
**characterized in that**
for producing the solution 2, the polymer is dissolved in a solvent consisting of a mixture of an alcoholic solution with a non-polar/low polar solvent.

**10.** Method according to any one of claims 7 to 9,
   **characterized in that**
   the coating of the carrier material in accordance with d) is carried out by immersion coating methods, spray-on methods, impression methods, blade coating methods, or rotation coating methods.

**Revendications**

**1.** Optode, comprenant les constituants suivants :

   a) un matériau de support, comprenant une feuille transparente d'acétate de cellulose ou de diacétate de cellulose
   b) une solution 3, constituée d'un mélange d'une solution 1 et d'une solution 2, la solution 1 comprenant au moins un acide 8-hydroxy-1, 3, 6 trisulfonique fluorophore dissout dans un solvant et la solution 2 comprenant un polymère d'éthylcellulose dissous dans un solvant, la solution 3 étant immobilisée sur le matériau de support,

   **caractérisée**
   **en ce que** l'optode a, à partir d'une longueur d'onde de 280 nm, un facteur de transmission de plus de 90%.

**2.** Optode suivant la revendication 1,
   **caractérisée**
   **en ce que** l'optode a au moins un fluorophore immobilisé, qui est fluorescent en fonction de la quantité des paramètres chimiques et/ou physiques à mesurer.

**3.** Optode suivant l'une des revendications 1 à 2,
   **caractérisée**
   **en ce que** l'optode a, à partir d'une longueur d'onde de 725 nm, un facteur de transmission de plus de 99%.

**4.** Optode suivant l'une des revendications 1 à 3,
   **caractérisée**
   **en ce que** l'optode a une diminution du pouvoir de résolution de 4%, lorsqu'elle est exposée à de la lumière dans le domaine visible du spectre et une diminution du pouvoir de résolution de 1%, lorsqu'elle est exposée à de la lumière dans le domaine du proche infrarouge du spectre.

**5.** Optode suivant l'une des revendications 1 à 4,

   **caractérisée**
   **en ce que** l'optode a une diminution du contraste de valeur de gris de 24%, lorsqu'elle est exposée à de la lumière dans le domaine visible du spectre et de 6%, lorsqu'elle est exposée à de la lumière dans le domaine du proche infrarouge du spectre.

**6.** Optode suivant l'une des revendications 1 à 5,
   **caractérisée**
   **en ce qu'**elle est plane.

**7.** Procédé de fabrication d'une optode suivant l'une des revendications 1 à 8, comprenant les stades de procédé suivants :

   a) préparation d'une solution 1, comprenant au moins un acide 8-hydroxy-1, 3, 6 trisulfonique fluorophore dissout
   b) préparation d'une solution 2, comprenant un polymère d'éthylcellulose dissous
   c) mélange des solutions 1 et 2 pour préparer la solution 3
   d) revêtement d'une feuille transparente d'acétate de cellulose ou de diacétate de cellulose de la solution 3
   e) séchage de l'optode
   f) nettoyage de l'optode.

**8.** Procédé suivant la revendication 7,

caractérisé

en ce pour préparer la solution 1, on dissout le fluorophore dans une solution constituée d'une solution d'hydroxyde de tétraoctylammonium et d'une solution alcoolique.

9. Procédé suivant l'une des revendications 7 à 8,
**caractérisé**
**en ce que** pour préparer la solution 2, on dissout le polymère dans un solvant, constitué d'un mélange d'une solution alcoolique et d'un solvant non polaire/peu polaire.

10. Procédé suivant l'une des revendications 7 à 9,
**caractérisé**
**en ce que** l'on effectue le revêtement du matériau de support suivant d) par un procédé de revêtement par immersion, par un procédé de pulvérisation, par un procédé d'impression, par un procédé de revêtement à la racle ou par un procédé de revêtement par rotation.

a)

b)

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SCHMUNDT et al.** *Root leaf aquisition,* 1998
- Professur für Geodäsie und Geoinformatik (GG) Universität Rostock. Geoinformatik-Service. Universität Rostock, 2008
- **BLOSSFELD S ; GANSERT D.** A novel non-invasive optical method for quantitative visualization of pH dynamics in the rhizosphere of plants. *Plant, Cell and Environment,* 2007, vol. 30, 176-186
- **BLOSSFELD S ; PERRIGUEY J ; STERCKEMAN T ; MOREL J-L ; LÖSCH R.** Rhizosphere pH dynamics in trace-metal-contaminated soils, monitored with planar pH optodes. *Plant and Soil,* 2010, vol. 330, 173-184
- **BURGER W ; BURGE MJ.** Digital image processing. An Algorithmic Introduction Using Java. Springer Verlag, 2008, 104
- Der große Duden. Rechtschreibung. **DUDEN.** Wörterbuch und Leitfaden der Deutschen Rechtschreibung. Dudenverlag, 1974
- **FREDERIKSEN S M ; GLUD RN.** Oxygen dynamics in the rhizosphere of Zostera marina: A two-dimensional planar optode study. *Limnol. Oceanogr.,* 2006, vol. 51, 1072-1083
- **GLUD RN H ; SANTEGOEDS C M ; BEER D D ; KOHLS O ; RAMSING N B.** OxyGen dynamics at the base of a biofilm studied with planar optodes. *Aquatic Microbial Ecology,* 1998, vol. 14, 223-233
- **HAKONEN A ; HULTH S.** A high-precision ratiometric fluorosensor for pH: Implementing time-dependent non-linear calibration protocols for drift compensation. *Anal Chim Acta,* 2007, vol. 606, 63-71
- **HAKONEN A ; HULTH S.** A high-precision ratiometric fluorosensor for pH: Implementing time-dependent non-linear calibration protocols for drift compensation. *An lytica Chimica Acta,* 2008, vol. 606, 63-71
- **HAKONEN A ; HULTH S ; DUFOUR S.** Analytical performance during ratiometric long-term imaging of pH in bioturbated sediments. *Talanta,* 2010, vol. 81, 1393-1401
- **HOLST G ; GRUNWALD B.** Luminescence lifetime imaging with transparent oxygen optodes. *Sensors and Actuators B: Chemical,* 2001, vol. 74, 78-90
- **HOLST G ; KOHLS O ; KLIMANT I ; KÖNIG B ; KÜHL M ; RICHTER T.** A modular luminescence lifetime imaging system for mapping oxygen distribution in biological samples. *Sensors and Actuators B: Chemical,* 1998, vol. 51, 163-170
- **HULTH S A, R. C. ; ENGSTRÖM P ; SELANDER E.** A pH Plate Fluorosensor (Optode) for Early Diagenetic Studies of Marine Sediments. *Limnol Oceanogr,* 2002, vol. 47, 212-220
- **JÄHNE B. ; HAUßECKER H. ; GEIßLER P.** Handbook of Computer Vision and Applications. Signal Processing and Pattern Recognition. ACADEMIC PRESS, 1999, vol. 2
- **KESSLER RW.** Prozessanalytik. Strategien und Fallbeispiele aus der industriellen Praxis. Wiley, 2006, 384
- **MÜTZE K ; FOITZIG L ; KRUG W ; SCHREIBER G.** ABC der Optik. Verlag, 1972
- Abhängigkeit des Wurzelwachstums vom Lichtregime des Sprosses und deren Modifikation durch Nährstoffe sowie im Gravitropismus. **NAGEL KA.** Schriften des Forschungszentrums Jülich. Reihe Umwelt, Environment. Dissertation Universität Düsseldorf, 2006, vol. 63
- **NAGEL KA ; KASTENHOLZ B ; JAHNKE S ; VAN DUSSCHOTEN D ; AACH T ; MÜHLICH M ; TRUHN D ; SCHARR H ; TERJUNG S ; WALTER A.** Temperature responses of roots: impact on growth, root system architecture and implications for phenotyping. *Funct Plant Biol,* 2009, vol. 36, 947-959
- **OGURI K ; KITAZATO H ; GLUD R N.** Platinum octaetylporphyrin based planar optodes combined with an UV-LED excitation light source: An ideal tool for high-resolution O2 imaging in O2 depleted environments. *Marine Chemistry,* 2006, vol. 100, 95-107
- **PRECHT E ; FRANKE U ; POLERECKY L ; HUETTEL M.** Oxygen dynamics in permeable sediments with wave-driven pore water exchange. *Limnol Oceanogr,* 2004, vol. 49, 693-705
- Transparente Polymer-Nanokomposite für Anwendungen in der Mikrooptik. **RITZHAUPT-KLEISSL E.** Wissenschaftliche Berichte. Forschungszentrum Karlsruhe, 2007, 90
- **SCHMUNDT D ; STITT M ; JÄHNE B ; SCHURR U.** Quantitative analysis of the local rates of growth of dicot leaves at a high temporal and spatial resolution, using image sequence analysis. *Plant Journal,* 1998, vol. 16, 505-514
- **SCHRÖDER CR.** Luminescent planar single and dual optodes for timeresolved imaging of pH, pCO2 and pO2 in marine systems. *Dissertation Universität Regensburg, Fakultät für Chemie und Pharmazie,* 2006

- **STAAL M ; BORISOV SM ; RICKELT LF ; KLIMANT I ; KÜHL M.** Ultrabright planar optodes for luminescence life-time based microscopic imaging of O2 dynamics in biofilms. *J. Microbiol Methods,* 2011, vol. 85, 67-74
- **STAHL H ; GLUD A ; SCHRÖDER CR ; KLIMANT I ; TENGBERG A ; GLUD RN.** Timeresolved pH imaging in marine sediments with a luminescent planar optode. *Limnol Oceanogr: Methods,* 2006, vol. 4, 336-345
- **STRÖMBERG N ; HULTH S.** Assessing an imaging ammonium sensor using time correlated pixel-by-pixel calibration. *Anal Chim Acta,* 2005, vol. 550, 61-68

- **WALTER A ; SILK WK ; SCHURR U.** Environmental effects on spatial and temporal patterns of leaf and root growth. *Annu Rev Plant Biol,* 2009, vol. 60, 279-304
- **WOLFBEIS, O.S.** Optoden und Fluorophore. Nachrichten aus Chemie. *Technik und Laboratorium,* 1995, vol. 43, 313-316
- **ZHU QZ ; ALLER RC ; FAN YZ.** High-performance planar pH fluorosensor for two-dimensional pH measurements in marine sediment and water. *Environ Sci Technol,* 2005, vol. 39, 8906-8911
- **ZHU QZ ; ALLER RC ; FAN YZ.** A new ratiometric, planar fluorosensor for measuring high resolution, two-dimensional pCO2 distributions in marine sediments. *Mar Chem,* 2006, vol. 101, 40-53, http://www.irfanview.com/ www.wikipedia.org